# EUROPEAN PATENT SPECIFICATION

(11) **EP 3 686 969 B1**
(45) Date of publication and mention of the grant of the patent: **03.04.2024**
(21) Application number: 19856441.1
(22) Date of filing: 27.09.2019
(51) Int. Cl.: B32B 41/00, H01M 4/139, H01M 10/052, B29C 43/52

(54) **BATTERY ELECTRODE PIECE THERMAL COMPOUNDING APPARATUS AND METHOD FOR USING SAME TO CARRY OUT THERMO-COMPRESSION BONDING ON BATTERY ELECTRODE PIECE ASSEMBLY**
THERMISCHES KOMPOUNDIERGERÄT FÜR BATTERIEELEKTRODENSTÜCK UND VERFAHREN ZU SEINER VERWENDUNG ZUM THERMOKOMPRESSIONSBONDEN BEI EINER BATTERIEELEKTRODENSTÜCKANORDNUNG
APPAREIL DE COMPOSITION THERMIQUE DE PIÈCES D'ÉLECTRODE DE BATTERIE ET SON PROCÉDÉ D'UTILISATION POUR RÉALISER UNE LIAISON PAR THERMOCOMPRESSION SUR UN ENSEMBLE DE PIÈCES D'ÉLECTRODE DE BATTERIE

(30) Priority: 16.10.2018 CN 201811204403
(43) Date of publication of application: 29.07.2020
(73) Proprietor: Shenzhen Geesun Intelligent Technology Co., Ltd., Shenzhen, Guangdong 518103 (CN)
(72) Inventor: YANG, Rukun, Shenzhen Guangdong 518103 (CN); CHEN, Fei, Shenzhen Guangdong 518103 (CN); YANG, Ji, Shenzhen Guangdong 518103 (CN); WEI, Hongsheng, Shenzhen Guangdong 518103 (CN)
(74) Representative: Dilg, Andreas
(86) International application number: PCT/CN2019/108678
(87) International publication number: WO 2020/078201

(56) References cited:
- WO-A1-2006/131950
- WO-A1-2018/084491
- WO-A1-2018/084491
- CN-A- 101 271 269
- CN-A- 107 834 021
- CN-A- 108 511 673
- CN-A- 109 244 371
- CN-U- 202 275 887
- CN-U- 208 781 946
- JP-A- 2013 069 637
- US-A- 5 637 416
- US-A1- 2011 033 737
- US-B1- 6 800 398

## Description

### Technical Field

The present disclosure relates to the technical field of manufacturing of lithium ion batteries, and in particular to a thermal combination (or hot pressing) equipment for electrodes (or battery electrodes) and a method for thermocompression of an electrode lamination (or a battery electrode assembly) using the thermal combination equipment.

### Background Art

At present, a lithium ion battery is usually manufactured by using a lamination process, and is specifically manufactured using thermal combination lamination. Specifically, before the lamination, it is necessary to heat a positive electrode material strip, a negative electrode material strip, and two separator strips using a heat generation device, and then the above fours strips are laminated by an appropriate pressure so that they are adhered to one another to form an integrated piece.

The inventors have found through study that a battery cell obtained in the above manner has a tight structure with almost zero gap between a separator and electrodes, which leads to a long electrolyte permeation time in the subsequent electrolyte injection process, which can hardly meet the rapidly increasing demand for power batteries in the new energy market at present. Therefore, how to achieve rapid electrolyte injection in a laminate obtained by thermal combination of the positive electrode material strip, the negative electrode material strip, and the separator strip is a technical problem to be solved urgently.

A lamination device according to the background art is known from WO 2018/084491 A1. It comprises a pattern roller portion for implementing a pattern on an electrode assembly. The pattern roller portion comprises a rotating roller arranged on the surface of the electrode assembly so as to emit heat and a pattern cover wound around the outer peripheral surface of the rotating roller so as to partially pressurize the surface of the electrode assembly together with heat transferred from the rotating roller, thereby implementing a pattern. The pattern cover comprises a pattern film wound around the outer peripheral surface of the rotating roller and a deformation member provided on the inner surface of the pattern film and deformed by heat transferred from the rotating roller such that the pattern film is wound around the outer peripheral surface of the rotating roller.

### Summary

The present invention provides a thermal combination equipment for electrodes and a method for thermocompression of an electrode lamination using the equipment to effectively alleviate the above technical problems, as defined in appended claims 1 to 13.

Embodiments of the present disclosure may be implemented, for example, in the following manner:
An embodiment of the present disclosure provides a thermal combination equipment for electrodes , which is applicable to thermocompression of an electrode lamination, the thermal combination equipment for electrodes comprising a base, a heating device, and an electrode lamination device disposed on the base, wherein the heating device is disposed in the electrode lamination device;
the electrode lamination device comprises a first lamination roller, a second lamination roller, and a driving device, wherein both the first lamination roller and the second lamination roller are connected with the driving device, the first lamination roller and the second lamination roller are disposed side by side (in parallel), and a gap allowing an electrode lamination to pass therethrough is provided between the first lamination roller and the second lamination roller, a plurality of grooves are provided on an outer surface(s) of the first lamination roller and/or the second lamination roller, the heating device is configured to heat the electrode lamination, and the heated electrode lamination is conveyed to the gap between the first lamination roller and the second lamination roller so as to be thermo-laminated by the first lamination roller and the second lamination roller.

Optionally, in the thermal combination equipment for electrodes described above, the first lamination roller has similar shape and size as those of the second lamination roller, and the first lamination roller is provided thereon with a plurality of grooves which have similar shape and size and are sequentially spaced apart from one another.

Optionally, in the thermal combination equipment for electrodes described above, the second lamination roller is provided with a plurality of grooves which have similar shape and size and are sequentially spaced apart from one another.

Optionally, in the thermal combination equipment for electrodes described above, each groove is an annular groove circumferentially provided at the periphery of the respective lamination roller.

Optionally, in the thermal combination equipment for electrodes described above, the driving device comprises a servo motor, a first driving component, and a second driving component, wherein the first driving component is connected with the first lamination roller, the second driving component is connected with the second lamination roller, and the servo motor is connected with both of the first driving component and the second driving component so as to simultaneously drive the first driving component and the second driving component such that the first lamination roller and the second lamination roller are simultaneous driven to rotate, and the first lamination roller and the second lamination roller are rotated at the same peripheral velocity in opposite directions.

Optionally, in the thermal combination equipment for electrodes described above, the heating device is disposed at substantially the same level as the gap between the first lamination roller and the second lamination roller.

According to the invention, in the thermal combination equipment for electrodes described above, the heating device comprises a first heating component and a second heating component disposed opposite to each other, wherein the first heating component is disposed on the first lamination roller, and the second heating component is disposed on the second lamination roller, and a gap between the first heating component and the second heating component is provided at substantially the same level as the gap between the first lamination roller and the second lamination roller, and the distance between the first heating component and the second heating component matches the thickness of the electrode lamination, so that the first heating component and the second heating component can heat the electrode lamination from both sides of the electrode lamination, respectively.

According to the invention, in the thermal combination equipment for electrodes described above, the first heating component and the second heating component have similar shape and size, each of the first heating component and the second heating component comprises a heating plate, a heat insulation plate, and a heating wire, wherein the heating wire is embedded in the heating plate, the heat insulation plate is disposed on a side of the heating plate away from the heating wire, and the heating plate is disposed such that the heat insulation plate is between the first lamination roller and the heating plate, and a side of the heating plate away from the heat insulation plate, that is, a side of the heating plate on which the heating wire is disposed, faces the to-be-heated electrode lamination so as to heat the electrode lamination.

Optionally, in the thermal combination equipment for electrodes described above, the first heating component and/or the second heating component each have a circular or rectangular surface for heating.

Optionally, in the thermal combination equipment for electrodes described above, the first heating component and/or the second heating component each have one heating wire, wherein the heating wire is embedded in the heating plate in a serpentine form.

Optionally, in the thermal combination equipment for electrodes described above, the first heating component and/or the second heating component each have a plurality of heating wires, and the heating wires are embedded in the heating plate in a parallel and side-by-side manner.

Optionally, in the thermal combination equipment for electrodes described above, the thermal combination equipment for electrode further comprises a support seat and a pressing cylinder, wherein the support seat is disposed on the base, and the pressing cylinder is disposed on the support seat and is connected with the first lamination roller such that the first lamination roller applies a downward pressure to the electrode lamination.

Optionally, in the thermal combination equipment for electrodes described above, the thermal combination equipment for electrodes further comprises an auxiliary cylinder, a sliding plate, and a connection plate, wherein the auxiliary cylinder is disposed on the support seat, the first lamination roller is disposed on the connection plate, and the connection plate is connected with the support seat via the sliding plate, so that the auxiliary cylinder drives the first lamination roller disposed on the connection plate to slide up and down along the sliding plate to adjust the distance between the first lamination roller and the second lamination roller.

Optionally, in the thermal combination equipment for electrodes described above, the thermal combination equipment for electrodes further comprises a transition roller, wherein the transition roller is disposed on the base and is on a side of the electrode lamination device away from the heating device and is configured to convey the laminated electrode lamination.

The present disclosure further provides a thermal combination equipment for electrodes, which is applicable to thermocompression of an electrode lamination, the thermal combination equipment for electrodes comprising: a base, a heating device, a transition roller, and an electrode lamination device disposed on the base, wherein the heating device is disposed in the electrode lamination device;
the electrode lamination device comprises a first lamination roller, a second lamination roller, and a driving device, both the first lamination roller and the second lamination roller are connected with the driving device, the first lamination roller and the second lamination roller are disposed side by side, and a gap allowing an electrode lamination to pass therethrough is provided between the first lamination roller and the second lamination roller, the first lamination roller and the second lamination roller have similar shape and size and an outer surface of each of the first lamination roller and the second lamination roller is provided with a plurality of grooves which are sequentially spaced apart from one another, the heating device is configured to heat the electrode lamination, the heated electrode lamination is conveyed to the gap between the first lamination roller and the second lamination roller so as to be thermo-laminated by the first lamination roller and the second lamination roller, and the transition roller is disposed on the base and is on a side of the electrode lamination device away from the heating device and is configured to convey the laminated electrode lamination.

The present disclosure further provides a method for thermocompression of an electrode lamination using the thermal combination equipment for electrodes described above, the method comprising: heating an electrode lamination using the heating device, and conveying the heated electrode lamination to the gap between the first lamination roller and the second lamination roller so that the heated electrode lamination is thermo-laminated by the first lamination roller and the second lamination roller.

Optionally, in the method for thermocompression of an electrode lamination described above, the first lamination roller has similar shape and size as those of the second lamination roller, and the first lamination roller is provided with a plurality of grooves which have similar shape and size and are sequentially spaced apart from one another.

Optionally, in the method for thermocompression of an electrode lamination described above, the second lamination roller is provided with a plurality of grooves which have similar shape and size and are sequentially spaced apart from one another.

Optionally, in the method for thermocompression of an electrode lamination described above, each groove is an annular groove circumferentially provided at the periphery of the respective lamination roller.

Optionally, in the method for thermocompression of an electrode lamination described above, the heating device comprises a first heating component and a second heating component disposed opposite to each other, wherein the first heating component is disposed on the first lamination roller, and the second heating component is disposed on the second lamination roller, and a gap between the first heating component and the second heating component is provided at substantially the same level as the gap between the first lamination roller and the second lamination roller, and the distance between the first heating component and the second heating component matches the thickness of the electrode lamination, so that the first heating component and the second heating component can heat the electrode lamination from both sides of the electrode lamination, respectively.

The thermal combination equipment for electrodes according to the embodiment of the present disclosure is provided with a base, a heating device and an electrode lamination device, wherein the electrode lamination device is provided with a first lamination roller, a second lamination roller and a driving device, and a plurality of grooves are provided on the outer surface(s) of the first lamination roller and/or the second lamination roller, so that a laminated electrode lamination obtained by thermocompression of the electrode lamination using the thermal combination equipment for electrodes described above has uncompacted transition zones, by which rapid injection of an electrolyte is achieved, thereby the applicability of the thermal combination equipment for electrodes is improved.

In order to enable more apparent and easier understanding of the above objects, features, and advantages of the present disclosure, preferred embodiments will be described below in detail by way of example with reference to the accompanying drawings.

### Brief Description of Drawings

In order to more clearly illustrate technical solutions of embodiments of the present disclosure, drawings required for use in the embodiments will be described briefly below. It is to be understood that the drawings below are merely illustrative of some embodiments of the present disclosure, and therefore should not be considered as a limitation on the scope thereof. It will be understood by those of ordinary skill in the art that other relevant drawings can also be obtained from these drawings without any inventive effort.
FIG. 1 is a schematic structural diagram of a thermal combination equipment for electrodes according to an embodiment of the present disclosure.
FIG. 2 is another schematic structural diagram of a thermal combination equipment for electrodes according to an embodiment of the present disclosure.
FIG. 3 is a schematic structural diagram of a first lamination roller according to an embodiment of the present disclosure.
FIG. 4 is a schematic structural diagram of a first heating component according to an embodiment of the present disclosure.

Reference Numerals: 100-thermal combination equipment for electrodes; 110-base; 120-heating device; 122-first heating component; 122a-heating plate; 122b-heat insulation plate; 122c-heating wire; 124-second heating component; 130-electrode lamination device; 132-first lamination roller; 133-groove; 134-second lamination roller; 140-support seat; 150-pressing cylinder; 160-auxiliary cylinder; 170-sliding plate; 180-connection plate; 190-transition roller.

### Detailed Description of Embodiments

The technical solutions of the embodiments of the present disclosure will be described below clearly and completely with reference to the accompanying drawings of the embodiments of the present disclosure. It is apparent that the embodiments to be described are some, rather than all of the embodiments of the present disclosure. Generally, the components of the embodiments of the present disclosure, as described and illustrated in the figures herein, may be arranged and designed in a wide variety of different configurations. Thus, the following detailed description of the embodiments of the present disclosure, as represented in the figures, is not intended to limit the scope of the present disclosure as claimed, but is merely representative of selected embodiments of the present disclosure. All the other embodiments obtained by those skilled in the art in light of the embodiments of the present disclosure without inventive efforts shall fall within the scope of the present disclosure as claimed.

It should be noted that similar reference numerals and letters refer to similar items in the following figures, and thus once an item is defined in one figure, it may not be further defined or explained in the following figures. Moreover, in the description of the present disclosure, terms such as "first" and "second" are used for distinguishing the description only, and should not be understood as an indication or implication of relative importance.

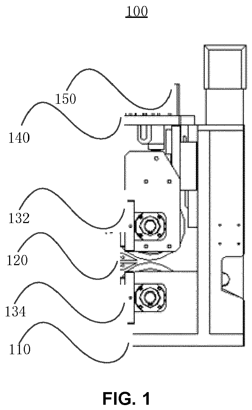

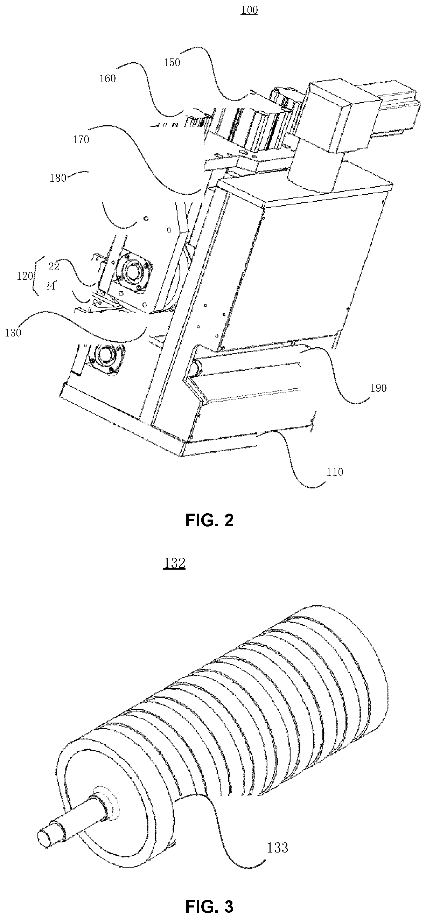

Referring to FIG. 1 and FIG. 2, an embodiment of the present disclosure provides a thermal combination equipment 100 for electrodes, which is applicable to the thermocompression of an electrode lamination. The thermal combination equipment 100 for electrodes comprises a base 110, a heating device 120, and an electrode lamination device 130 disposed on the base 110, wherein the heating device 120 is disposed in the electrode lamination device 130.

Optionally, in the embodiment of the present disclosure, the electrode lamination (rolling) device 130 may comprise a first lamination roller 132, a second lamination roller 134, and a driving device, wherein the first lamination roller 132 and the second lamination roller 134 are connected with the driving device, respectively, the first lamination roller 132 and the second lamination roller 134 are disposed side by side (in parallel), and there is a gap allowing an electrode lamination to pass therethrough between the first lamination roller 132 and the second lamination roller 134. Optionally, the heating device 120 is disposed at substantially the same level as the gap between the first lamination roller 132 and the second lamination roller 134. Referring to FIG. 3, optionally, an outer surface of the first lamination roller 132 is provided with a plurality of grooves 133, and similarly, an outer surface of the second lamination roller 134 may also optionally be provided with a plurality of grooves 133. The heating device 120 is configured to heat the electrode lamination, and the heated electrode lamination is conveyed to the gap between the first lamination roller 132 and the second lamination roller 134 so as to be thermo-compressed by the first lamination roller 132 and the second lamination roller 134.

It should be noted that, in the embodiment of the present disclosure, the electrode lamination may comprise a positive electrode, a first separator (film), a negative electrode, and a second separator (film) which are sequentially disposed in a stacked manner, or the electrode lamination may only comprise a first separator, a negative electrode, and a second separator which are sequentially stacked, and optionally, the electrode lamination may also comprise a plurality of electrodes, wherein each of the electrodes is provided with separators on both sides thereof.

When the thermal combination equipment 100 for electrodes described above is used for performing lamination (compression bonding) on the electrode lamination described above, the electrode lamination is heated using the heating device 120, and the heated electrode lamination is conveyed to the gap between the first lamination roller 132 and the second lamination roller 134 so as to be thermo-compressed by the first lamination roller 132 and the second lamination roller 134. Due to the grooves 133 provided on the first lamination roller 132 and/or the second lamination roller 134, during the lamination, portions of the electrode lamination which are corresponding to the grooves 133 are not compacted while a portion of the electrode lamination which is corresponding to a portion between each two adjacent grooves 133 is compacted, so that the separator in the obtained laminated electrode lamination has transition zones. Accordingly, when the laminated electrode lamination described above is used for making a battery, an electrolyte can rapidly permeate the laminated electrode lamination through the transition zones, whereby rapid electrolyte injection is achieved, that is to say, the electrolyte permeation time in the subsequent electrolyte injection process is reduced so as to accelerate the entire production process.

The base 110 may have any shape, and may, for example, have a regular shape such as a rectangular parallelepiped shape, a truncated conical shape, or a cylindrical shape, or the base may have any irregular shape, which is not specifically limited herein.

Optionally, the heating device 120 may heat the electrode lamination at a temperature including, but not limited to, 80 °C, 90 °C, 110 °C, and 130 °C; and in addition, the heating temperature may also be adjusted according to actual requirements.

Optionally, the number of the heating devices 120 may be one or more, and the heating device 120 may have any shape or size as long as the heating of the electrode lamination can be achieved.

Optionally, in order to uniformly heat the electrode lamination using the heating device 120, in the embodiment of the present disclosure, referring to FIG. 2, the heating device 120 may comprise a first heating component 122 and a second heating component 124 disposed opposite to each other, wherein the first heating component 122 is disposed on the first lamination roller 132, and the second heating component 124 is disposed on the second lamination roller 134 such that a gap between the first heating component 122 and the second heating component 124 is at substantially the same level as the gap between the first lamination roller 132 and the second lamination roller 134. Moreover, the distance between the first heating component 122 and the second heating component 124 matches the thickness of the electrode lamination, so that the first heating component 122 and the second heating component 124 can heat the electrode lamination from both sides of the electrode lamination, respectively.

Optionally, the first heating component 122 and the second heating component 124 may have the same or different shapes and sizes.

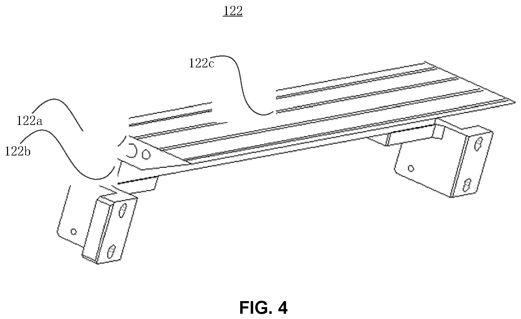

In order to further improve the effect of heating the electrode lamination by the heating device 120, in the embodiment of the present disclosure, the first heating component 122 and the second heating component 124 are identical in both shape and size. For the convenience of description, only the specific structure of the first heating component 122 will be described in detail in the present disclosure. Referring to FIG. 4, the first heating component 122 comprises a heating plate 122a, a heat insulation plate 122b, and heating wire 122c, wherein the heating wire 122c is embedded in the heating plate 122a, the heat insulation plate 122b is disposed on a side of the heating plate 122b away from the heating wire 122c, and the heating plate 122a is disposed such that the heat insulation plate 122b is between the first lamination roller 132 and the heating plate, such that a side of the heating plate 122a remote from the heat insulation plate 122b, that is, the side surface of the heating plate 122a on which the heating wire 122c is disposed, faces the to-be-heated electrode lamination so as to heat the electrode lamination.

Optionally, the surface of the heating plate 122a which is used for heating may have a regular shape such as a circle or a rectangle, or may have any irregular shape, and optionally, one or more heating wires 122c may be provided.

In the embodiment of the present disclosure, a case where the heating plate 122a has a rectangular surface for heating is exemplarily shown. When one heating wire 122c is provided, the heating wire 122c may optionally be embedded in the heating plate 122a in a serpentine form. When a plurality of heating wires 122c are provided, the plurality of heating wires 122c may optionally be embedded in the heating plate 122a in parallel side by side.

With the above arrangement, the electrode lamination is heated simultaneously by using the first heating component 122 and the second heating component 124, thus the electrodes and the separators in the electrode lamination can be uniformly heated to improve the uniformity of adhesion of the electrodes. In addition, the heat insulation plate 122b is provided such that it is possible to effectively avoid scalding of a user during the user's operation, and to avoid a situation where heat generated by the heating plate 122a adversely affects other components.

Optionally, the first lamination roller 132 and the second lamination roller 134 may have the same or different shapes and sizes. Optionally, in the case where both the first lamination roller 132 and the second lamination roller 134 are provided thereon with grooves 133, the first lamination roller 132 and the second lamination roller 134 may have the same number or different numbers of grooves 133; and the grooves 133 on the first lamination roller 132 and the grooves 133 on the second lamination roller 134 may have the same or different shapes and sizes. Optionally, the plurality of grooves 133 on each of the first lamination roller 132 and the second lamination roller 134 may also have the same or different shapes and sizes.

In order to achieve a better effect of adhesion between the electrodes and the separators in the obtained laminated electrode lamination, in the embodiment of the present disclosure, the first lamination roller 132 has similar shape and size as those of the second lamination roller 134, and the plurality of grooves 133 provided on the first lamination roller 132 have similar shape and size and are sequentially disposed spaced apart from one another.

Optionally, each groove 133 may be a strip groove or an annular groove, which is not specifically limited herein. In the embodiment of the present disclosure, a case where the grooves 133 are annular grooves is exemplarily shown, wherein the annular grooves are provided on the first lamination roller 132 and/or the second lamination roller 134 at positions by which it can be ensured that both ends of each of all the electrode laminations which have different widths in a lamination (pressing) range are thermally combined while a portion near the intermediate position between the both ends is spaced apart, so as to facilitate to picking up of the laminated electrode laminations in a subsequent stage.

It can be understood that the number, position(s), groove width, groove depth, and groove shape of the above annular grooves provided are set according to different requirements and occasions, and are not specifically limited herein.

In order to enable the driving device to synchronously control the first lamination roller 132 and the second lamination roller 134, in the embodiment of the present disclosure, optionally, the driving device comprises a servo motor, a first driving component, and a second driving component, wherein the first driving component is connected with the first lamination roller 132, the second driving component is connected with the second lamination roller 134, and the servo motor is connected with both of the first driving component and the second driving component so as to simultaneously drive the first driving component and the second driving component, in this way, the first lamination roller 132 and the second lamination roller 134 are simultaneous driven to rotate, wherein the first lamination roller 132 and the second lamination roller 134 are rotated at the same peripheral velocity in opposite directions (clock-wises).

With the above arrangement, the first lamination roller 132 and the second lamination roller 134 are simultaneously driven by the servo motor, thereby obtaining a better lamination effect and at the same time avoiding the problems of cost increase and complicated structure caused by use of different driving devices.

It should be noted that, optionally, the first driving component and the second driving component described above may be rotary driving shafts or driving bearings.

In order to allow the first lamination roller 132 and the second lamination roller 134 to laminate the electrode lamination with uniform pressure so as to endow the laminated electrode lamination with a better lamination effect, in the embodiment of the present disclosure, optionally, the thermal combination equipment 100 for electrodes may further comprise a support seat 140 and a pressing cylinder 150, referring to FIG. 1. The support seat 140 is disposed on the base 110, and the pressing cylinder 150 is disposed on the support seat 140 and connected with the first lamination roller 132 such that the first lamination roller applies a downward pressure to the electrode lamination.

In order to enable thermocompression of different electrode laminations so as to endow the thermal combination equipment 100 for electrodes with a higher applicability, in the embodiment of the present disclosure, optionally, referring to FIG. 2, the thermal combination equipment 100 for electrodes may further comprise an auxiliary cylinder 160, a sliding plate 170, and a connection plate 180. The auxiliary cylinder 160 is disposed on the support seat 140, the first lamination roller 132 is disposed on the connection plate 180, and the connection plate 180 is connected with the support seat 140 via the sliding plate 170, so that the auxiliary cylinder 160 drives the first lamination roller 132 disposed on the connection plate 180 to slide up and down along the sliding plate 170 to adjust the distance between the first lamination roller 132 and the second lamination roller 134.

In order to avoid the problem of damage of the laminated electrode lamination during its conveyance so as to further improve the applicability of the thermal combination equipment 100 for electrodes, in the embodiment of the present disclosure, optionally, referring to FIG. 2, the thermal combination equipment 100 for electrodes may further comprise a transition roller 190. The transition roller 190 is disposed on the base 110 and is on a side of the electrode lamination device 130 away from the heating device 120 and is configured to convey the laminated electrode lamination.

In summary, the thermal combination equipment 100 for electrodes according to the present disclosure is provided with a base 110, a heating device 120 and an electrode lamination device 130, wherein the electrode lamination device 130 is provided with a first lamination roller 132, a second lamination roller 134 and a driving device, and a plurality of grooves 133 are provided on the outer surface of the first lamination roller 132, so that an electrolyte can be rapidly injected into a laminated electrode lamination obtained by thermocompression of the electrode lamination using the above thermal combination equipment 100 for electrodes, whereby the electrolyte permeation time in the subsequent electrolyte injection process is reduced so as to accelerate the entire production process. The pressing cylinder 150 is provided such that the laminated electrode lamination is endowed with a better uniformity and a better lamination effect. The auxiliary cylinder 160, the sliding plate 170, the connection plate 180, and the transition roller 190 are provided to adjust the distance between the first lamination roller 132 and the second lamination roller 134, whereby it is possible to perform thermocompression on different electrode laminations, so that the thermal combination equipment 100 for electrodes has a higher applicability.

The above description is merely illustrative of specific embodiments of the present disclosure, but the scope of protection of the present disclosure is not limited thereto. Any variations or alternatives that can be readily envisaged by those skilled in the art within the technical scope disclosed in the present disclosure are intended to be encompassed in the scope of protection of the present disclosure. Therefore, the scope of protection of the present disclosure should be determined by the scope of protection of the claims.

### Industrial Applicability:

In summary, the present disclosure provides a thermal combination equipment for electrodes. An electrode lamination obtained using the equipment enables an electrolyte to be rapidly injected therein and is endowed with a better uniformity and a better lamination effect, and the equipment is applicable to lamination of different electrodes, has high applicability, and can effectively meet the rapidly increasing demand for batteries in the new energy market. The equipment has a simple structure, which contributes to a significant reduction of the production cost.

## Claims

1. A thermal combination equipment for electrodes (100), which is applicable to thermocompression of an electrode lamination, wherein the thermal combination equipment for electrodes (100) comprises a base (110), a heating device (120), and an electrode lamination device (130) disposed on the base (110), wherein the heating device (120) is disposed in the electrode lamination device (130);
the electrode lamination device (130) comprises a first lamination roller (132), a second lamination roller (134), and a driving device, both the first lamination roller (132) and the second lamination roller (134) are connected with the driving device, the first lamination roller (132) and the second lamination roller (134) are disposed side by side, and a gap allowing an electrode lamination to pass therethrough is provided between the first lamination roller (132) and the second lamination roller (134), a plurality of grooves (133) are provided on an outer surface(s) of the first lamination roller (132) and/or the second lamination roller (134), the heating device (120) is configured to heat the electrode lamination, and the heated electrode lamination is conveyed to the gap between the first lamination roller (132) and the second lamination roller (134) so as to be thermo-laminated by the first lamination roller (132) and the second lamination roller (134),
wherein the heating device (120) comprises a first heating component (122) and a second heating component (124) disposed opposite to each other, the first heating component (122) is disposed on the first lamination roller (132), and the second heating component (124) is disposed on the second lamination roller (134), and a gap between the first heating component (122) and the second heating component (124) is provided at a level substantially same as a level at which the gap between the first lamination roller (132) and the second lamination roller (134) is, and a distance between the first heating component (122) and the second heating component (124) matches a thickness of the electrode lamination, so that the first heating component (122) and the second heating component (124) can heat the electrode lamination from both sides of the electrode lamination, respectively,
wherein the first heating component (122) and the second heating component (124) have similar shape and size, each of the first heating component (122) and the second heating component (124) comprises a heating plate (122a), a heat insulation plate (122b), and a heating wire (122c), wherein the heating wire is embedded in the heating plate (122a), the heat insulation plate (122b) is disposed on a side of the heating plate (122a) away from the heating wire, and the heating plate (122a) is disposed such that the heat insulation plate (122b) is between the heating plate (122a) and the first lamination roller (132), and a side of the heating plate (122a) away from the heat insulation plate (122b), that is, a side of the heating plate (122a) on which the heating wire is disposed, faces the to-be-heated electrode lamination so as to heat the electrode lamination; and the first heating component (122) and/or the second heating component (124) each have a circular or rectangular surface for heating.

2. The thermal combination equipment for electrodes (100) according to claim 1, wherein the first lamination roller (132) has similar shape and size as those of the second lamination roller (134), and the first lamination roller (132) is provided thereon with a plurality of grooves (133) which have similar shape and size and are sequentially spaced apart from one another; and the second lamination roller (134) is provided thereon with a plurality of grooves (133) which have similar shape and size and are sequentially spaced apart from one another.

3. The thermal combination equipment for electrodes (100) according to claim 1 or 2, wherein each groove (133) is an annular groove (133) circumferentially provided at the periphery of the respective lamination roller.

4. The thermal combination equipment for electrodes (100) according to any one of claims 1 to 3, wherein the driving device comprises a servo motor, a first driving component, and a second driving component, the first driving component is connected with the first lamination roller (132), the second driving component is connected with the second lamination roller (134), and the servo motor is connected with both of the first driving component and the second driving component so as to simultaneously drive the first driving component and the second driving component such that the first lamination roller (132) and the second lamination roller (134) are simultaneous driven to rotate, and the first lamination roller (132) and the second lamination roller (134) are rotated at same peripheral velocity and in opposite directions and the heating device (120) is disposed at a level substantially same as a level at which the gap between the first lamination roller (132) and the second lamination roller (134) is provided.

5. The thermal combination equipment for electrodes (100) according to any one of claims 1 to 4, wherein the first heating component (122) and/or the second heating component (124) each have one heating wire and the heating wire is embedded in the heating plate (122a) in a serpentine form.

6. The thermal combination equipment for electrodes (100) according to any one of claims 1 to 5, wherein the first heating component (122) and/or the second heating component (124) each have a plurality of heating wires, and the heating wires are embedded in the heating plate (122a) in a parallel and side-by-side manner.

7. The thermal combination equipment for electrodes (100) according to any one of claims 1 to 6, wherein the thermal combination equipment for electrodes (100) further comprises a support seat (140) and a pressing cylinder (150), wherein the support seat (140) is disposed on the base (110), and the pressing cylinder (150) is disposed on the support seat (140) and is connected with the first lamination roller (132) such that the first lamination roller (132) apply a downward pressure to the electrode lamination.

8. The thermal combination equipment for electrodes (100) according to claim 7, wherein the thermal combination equipment for electrodes (100) further comprises an auxiliary cylinder (160), a sliding plate (170), and a connection plate (180), wherein the auxiliary cylinder (160) is disposed on the support seat (140), the first lamination roller (132) is disposed on the connection plate (180), and the connection plate (180) is connected with the support seat (140) via the sliding plate (170), so that the auxiliary cylinder (160) drives the first lamination roller (132) which is disposed on the connection plate (180) to slide up and down along the sliding plate (170) to adjust the distance between the first lamination roller (132) and the second lamination roller (134).

9. The thermal combination equipment for electrodes (100) according to any one of claims 1 to 8, wherein the thermal combination equipment for electrodes (100) further comprises a transition roller (190), and the transition roller (190) is disposed on the base (110) and is on a side of the electrode lamination device (130) away from the heating device (120), the transition roller (190) is configured to convey the laminated electrode lamination.

10. The thermal combination equipment for electrodes (100) according to any one of claims 1 to 9, further comprising a transition roller (190);
the transition roller (190) is configured to convey the laminated electrode lamination.

11. A method for thermocompression of an electrode lamination using the thermal combination equipment for electrodes (100) according to any one of claims 1 to 10, comprising steps of: heating an electrode lamination using the heating device (120), and conveying the heated electrode lamination to the gap between the first lamination roller (132) and the second lamination roller (134) so that the heated electrode lamination is thermo-laminated by the first lamination roller (132) and the second lamination roller (134).

12. The method for thermocompression of an electrode lamination according to claim 11, wherein the first lamination roller (132) has the similar shape and size as those of the second lamination roller (134), and the first lamination roller (132) is provided with a plurality of grooves (133) which have similar shape and size and are sequentially spaced apart from one another; and the second lamination roller (134) is provided with a plurality of grooves (133) which have similar shape and size and are sequentially spaced apart from one another, wherein each groove (133) is an annular groove (133) circumferentially provided at the periphery of the respective lamination roller.

13. The method for thermocompression of an electrode lamination according to claim 11 or 12, wherein the driving device comprises a servo motor, a first driving component, and a second driving component, the first driving component is connected with the first lamination roller (132), the second driving component is connected with the second lamination roller (134), and the servo motor is connected with both of the first driving component and the second driving component so as to simultaneously drive the first driving component and the second driving component, such that the first lamination roller (132) and the second lamination roller (134) are simultaneous driven to rotate, and the first lamination roller (132) and the second lamination roller (134) are rotated at same peripheral velocity and in opposite directions.

## Patentansprüche

1. Thermische Kombinationsausrüstung für Elektroden (100), die für die Thermokompression einer Elektrodenlamination anwendbar ist, wobei die thermische Kombinationsausrüstung für Elektroden (100) eine Basis (110), eine Heizvorrichtung (120) und eine Elektrodenlaminationsvorrichtung (130) aufweist, die auf der Basis (110) angeordnet ist, wobei die Heizvorrichtung (120) in der Elektrodenlaminationsvorrichtung (130) angeordnet ist;
die Elektrodenlaminationsvorrichtung (130) eine erste Laminierwalze (132), eine zweite Laminierwalze (134) und eine Antriebsvorrichtung aufweist, wobei sowohl die erste Laminierwalze (132) als auch die zweite Laminierwalze (134) mit der Antriebsvorrichtung verbunden sind, die erste Laminierwalze (132) und die zweite Laminierwalze (134) nebeneinander angeordnet sind und zwischen der ersten Laminierwalze (132) und der zweiten Laminierwalze (134) ein Spalt vorgesehen ist, durch den eine Elektrodenlamination hindurchtreten kann, eine Vielzahl von Nuten (133) auf einer oder mehreren Außenflächen der ersten Laminierwalze (132) und/oder der zweiten Laminierwalze (134) vorgesehen sind, die Heizvorrichtung (120) so konfiguriert ist, dass sie die Elektrodenlamination erwärmt, und die erwärmte Elektrodenlamination zu dem Spalt zwischen der ersten Laminierwalze (132) und der zweiten Laminierwalze (134) befördert wird, um durch die erste Laminierwalze (132) und die zweite Laminierwalze (134) thermolaminiert zu werden
wobei die Heizvorrichtung (120) eine erste Heizkomponente (122) und eine zweite Heizkomponente (124) aufweist, die einander gegenüberliegend angeordnet sind, wobei die erste Heizkomponente (122) an der ersten Laminierwalze (132) angeordnet ist und die zweite Heizkomponente (124) an der zweiten Laminierwalze (134) angeordnet ist, und ein Spalt zwischen der ersten Heizkomponente (122) und der zweiten Heizkomponente (124) auf einem Niveau vorgesehen ist, das im Wesentlichen gleich dem Niveau ist, auf dem sich der Spalt zwischen der ersten Laminierwalze (132) und der zweiten Laminierwalze (134) befindet, und ein Abstand zwischen der ersten Heizkomponente (122) und der zweiten Heizkomponente (124) einer Dicke der Elektrodenlamination derart entspricht, dass die erste Heizkomponente (122) und die zweite Heizkomponente (124) die Elektrodenlamination jeweils von beiden Seiten der Elektrodenlamination erwärmen können, wobei die erste Heizkomponente (122) und die zweite Heizkomponente (124) eine ähnliche Form und Größe haben, jede der ersten Heizkomponente (122) und der zweiten Heizkomponente (124) eine Heizplatte (122a), eine Wärmeisolationsplatte (122b) und einen Heizdraht (122c) aufweist, wobei der Heizdraht in die Heizplatte (122a) eingebettet ist, die Wärmeisolationsplatte (122b) auf einer Seite der Heizplatte (122a) entfernt von dem Heizdraht angeordnet ist, und die Heizplatte (122a) so angeordnet ist, dass sich die Wärmeisolationsplatte (122b) zwischen der Heizplatte (122a) und der ersten Laminierwalze (132) befindet, und eine von der Wärmeisolationsplatte (122b) abgewandte Seite der Heizplatte (122a), d.h. eine Seite der Heizplatte (122a), auf der der Heizdraht angeordnet ist, der zu erwärmenden Elektrodenlamination zugewandt ist, um die Elektrodenlamination zu erwärmen; und die erste Heizkomponente (122) und/oder die zweite Heizkomponente (124) jeweils eine kreisförmige oder rechteckige Fläche zum Heizen aufweisen.

2. Thermische Kombinationsausrüstung für Elektroden (100) nach Anspruch 1, wobei die erste Laminierwalze (132) eine ähnliche Form und Größe wie die zweite Laminierwalze (134) hat, und die erste Laminierwalze (132) darauf mit einer Vielzahl von Nuten (133) versehen ist, die eine ähnliche Form und Größe haben und nacheinander voneinander beabstandet sind; und die zweite Laminierwalze (134) darauf mit einer Vielzahl von Nuten (133) versehen ist, die eine ähnliche Form und Größe haben und nacheinander voneinander beabstandet sind.

3. Thermische Kombinationsausrüstung für Elektroden (100) nach Anspruch 1 oder 2, wobei jede Nut (133) eine ringförmige Nut (133) ist, die am Umfang der jeweiligen Laminierwalze vorgesehen ist.

4. Thermische Kombinationsausrüstung für Elektroden (100) nach einem der Ansprüche 1 bis 3, wobei die Antriebsvorrichtung einen Servomotor, eine erste Antriebskomponente und eine zweite Antriebskomponente aufweist, die erste Antriebskomponente mit der ersten Laminierwalze (132) verbunden ist, die zweite Antriebskomponente mit der zweiten Laminierwalze (134) verbunden ist, und der Servomotor sowohl mit der ersten Antriebskomponente als auch mit der zweiten Antriebskomponente verbunden ist, um die erste Antriebskomponente und die zweite Antriebskomponente gleichzeitig anzutreiben, so dass die erste Laminierwalze (132) und die zweite Laminierwalze (134) gleichzeitig zur Drehung angetrieben werden, und die erste Laminierwalze (132) und die zweite Laminierwalze (134) mit derselben Umfangsgeschwindigkeit und in entgegengesetzten Richtungen gedreht werden und die Heizvorrichtung (120) auf einer Höhe angeordnet ist, die im Wesentlichen dieselbe ist wie eine Höhe, auf der der Spalt zwischen der ersten Laminierwalze (132) und der zweiten Laminierwalze (134) vorgesehen ist.

5. Thermische Kombinationsausrüstung für Elektroden (100) nach einem der Ansprüche 1 bis 4, wobei die erste Heizkomponente (122) und/oder die zweite Heizkomponente (124) jeweils einen Heizdraht aufweisen und der Heizdraht serpentinenförmig in die Heizplatte (122a) eingebettet ist.

6. Thermische Kombinationsausrüstung für Elektroden (100) nach einem der Ansprüche 1 bis 5, wobei die erste Heizkomponente (122) und/oder die zweite Heizkomponente (124) jeweils mehrere Heizdrähte aufweisen und die Heizdrähte parallel und nebeneinander in die Heizplatte (122a) eingebettet sind.

7. Thermische Kombinationsausrüstung für Elektroden (100) nach einem der Ansprüche 1 bis 6, wobei die thermische Kombinationsausrüstung für Elektroden (100) ferner einen Stützsitz (140) und einen Presszylinder (150) aufweist, wobei der Stützsitz (140) auf der Basis (110) angeordnet ist und der Presszylinder (150) auf dem Stützsitz (140) angeordnet ist und mit der ersten Laminierwalze (132) verbunden ist, so dass die erste Laminierwalze (132) einen Abwärtsdruck auf die Elektrodenlamination ausübt.

8. Thermische Kombinationsausrüstung für Elektroden (100) nach Anspruch 7, wobei die thermische Kombinationsausrüstung für Elektroden (100) ferner einen Hilfszylinder (160), eine Gleitplatte (170) und eine Verbindungsplatte (180) aufweist, wobei der Hilfszylinder (160) auf dem Stützsitz (140) angeordnet ist, die erste Laminierwalze (132) auf der Verbindungsplatte (180) angeordnet ist, und die Verbindungsplatte (180) mit dem Stützsitz (140) über die Gleitplatte (170) verbunden ist, so dass der Hilfszylinder (160) die erste Laminierwalze (132), die auf der Verbindungsplatte (180) angeordnet ist, antreibt, um entlang der Gleitplatte (170) auf und ab zu gleiten, um den Abstand zwischen der ersten Laminierwalze (132) und der zweiten Laminierwalze (134) einzustellen.

9. Thermische Kombinationsausrüstung für Elektroden (100) nach einem der Ansprüche 1 bis 8, wobei die thermische Kombinationsausrüstung für Elektroden (100) ferner eine Übergangswalze (190) aufweist, und die Übergangswalze (190) auf der Basis (110) angeordnet ist und sich auf einer von der Heizvorrichtung (120) abgewandten Seite der Elektrodenlaminationsvorrichtung (130) befindet, wobei die Übergangswalze (190) so konfiguriert ist, dass sie die laminierte Elektrodenlamination befördert.

10. Thermische Kombinationsausrüstung für Elektroden (100) nach einem der Ansprüche 1 bis 9, ferner umfassend eine Übergangswalze (190); wobei die Übergangswalze (190) so konfiguriert ist, dass sie die laminierte Elektrodenschicht transportiert.

11. Verfahren zum Thermokomprimieren eines Elektrodenblechs unter Verwendung der thermischen Kombinationsausrüstung für Elektroden (100) nach einem der Ansprüche 1 bis 10, das die folgenden Schritte aufweist: Erwärmen eines Elektrodenblechs unter Verwendung der Heizvorrichtung (120) und Befördern des erwärmten Elektrodenblechs zu dem Spalt zwischen der ersten Blechwalze (132) und der zweiten Blechwalze (134), so dass das erwärmte Elektrodenblech durch die erste Blechwalze (132) und die zweite Blechwalze (134) thermolaminiert wird.

12. Verfahren zum Thermokomprimieren eines Elektrodenblechs nach Anspruch 11, wobei die erste Laminierwalze (132) die gleiche Form und Größe wie die zweite Laminierwalze (134) hat und die erste Laminierwalze (132) mit einer Vielzahl von Nuten (133) versehen ist, die die gleiche Form und Größe haben und nacheinander voneinander beabstandet sind; und die zweite Laminierwalze (134) mit einer Vielzahl von Nuten (133) versehen ist, die eine ähnliche Form und Größe haben und nacheinander voneinander beabstandet sind, wobei jede Nut (133) eine ringförmige Nut (133) ist, die am Umfang der jeweiligen Laminierwalze vorgesehen ist.

13. Verfahren zum Thermokomprimieren eines Elektrodenblechs nach Anspruch 11 oder 12, wobei die Antriebsvorrichtung einen Servomotor, eine erste Antriebskomponente und eine zweite Antriebskomponente aufweist, die erste Antriebskomponente mit der ersten Laminierwalze (132) verbunden ist, die zweite Antriebskomponente mit der zweiten Laminierwalze (134) verbunden ist, und der Servomotor sowohl mit der ersten Antriebskomponente als auch mit der zweiten Antriebskomponente verbunden ist, um die erste Antriebskomponente und die zweite Antriebskomponente gleichzeitig anzutreiben, so dass die erste Laminierwalze (132) und die zweite Laminierwalze (134) gleichzeitig angetrieben werden, um sich zu drehen, und die erste Laminierwalze (132) und die zweite Laminierwalze (134) mit derselben Umfangsgeschwindigkeit und in entgegengesetzten Richtungen gedreht werden.

## Revendications

1. Équipement de combinaison thermique pour électrodes (100), qui est applicable à une thermocompression d'une stratification d'électrode, dans lequel l'équipement de combinaison thermique pour électrodes (100) comprend une base (110), un dispositif de chauffage (120), et un dispositif de laminage d'électrode (130) disposé sur la base (110), dans lequel le dispositif de chauffage (120) est disposé dans le dispositif de laminage d'électrode (130) ;
le dispositif de laminage d'électrode (130) comprend un premier cylindre de laminage (132), un second cylindre de laminage (134) et un dispositif d'entraînement, à la fois le premier cylindre de laminage (132) et le second cylindre de laminage (134) sont reliés au dispositif d'entraînement, le premier cylindre de laminage (132) et le second cylindre de laminage (134) sont disposés côte à côte, et un espace permettant à une stratification d'électrode de passer à travers celui-ci est prévu entre le premier cylindre de laminage (132) et le second cylindre de laminage (134), une pluralité de rainures (133) sont prévues sur une ou des surfaces extérieures du premier cylindre de laminage (132) et/ou du second cylindre de laminage (134), le dispositif de chauffage (120) est configuré pour chauffer la stratification d'électrode, et la stratification d'électrode chauffée est transportée vers l'espace entre le premier cylindre de laminage (132) et le second cylindre de laminage (134) de manière à être thermo-laminée par le premier cylindre de laminage (132) et le second cylindre de laminage (134),
dans lequel le dispositif de chauffage (120) comprend un premier composant de chauffage (122) et un second composant de chauffage (124) disposés à l'opposé l'un de l'autre, le premier composant de chauffage (122) est disposé sur le premier cylindre de laminage (132), et le second composant de chauffage (124) est disposé sur le second cylindre de laminage (134), et un espace entre le premier composant de chauffage (122) et le second composant de chauffage (124) est prévu à un niveau sensiblement identique à un niveau auquel se trouve l'espace entre le premier cylindre de laminage (132) et le second cylindre de laminage (134), et une distance entre le premier composant de chauffage (122) et le second composant de chauffage (124) correspond à une épaisseur de la stratification d'électrode, de sorte que le premier composant de chauffage (122) et le second composant de chauffage (124) peuvent chauffer la stratification d'électrode à partir des deux côtés de la stratification d'électrode, respectivement,
dans lequel le premier composant de chauffage (122) et le second composant de chauffage (124) ont une forme et une taille similaires, chacun du premier composant de chauffage (122) et du second composant de chauffage (124) comprend une plaque de chauffage (122a), une plaque d'isolation thermique (122b) et un fil de chauffage (122c), dans lequel le fil de chauffage est intégré dans la plaque de chauffage (122a), la plaque d'isolation thermique (122b) est disposée sur un côté de la plaque de chauffage (122a) éloigné du fil de chauffage, et la plaque de chauffage (122a) est disposée de telle sorte que la plaque d'isolation thermique (122b) est entre la plaque de chauffage (122a) et le premier cylindre de laminage (132), et un côté de la plaque de chauffage (122a) éloigné de la plaque d'isolation thermique (122b), c'est-à-dire un côté de la plaque de chauffage (122a) sur lequel le fil de chauffage est disposé, fait face à la stratification d'électrode à chauffer de manière à chauffer la stratification d'électrode ; et le premier composant de chauffage (122) et/ou le second composant de chauffage (124) présentent chacun une surface circulaire ou rectangulaire pour un chauffage.

2. Équipement de combinaison thermique pour électrodes (100) selon la revendication 1, dans lequel le premier cylindre de laminage (132) a une forme et une taille similaires à celles du second cylindre de laminage (134), et le premier cylindre de laminage (132) est muni sur celui-ci d'une pluralité de rainures (133) qui ont une forme et une taille similaires et sont espacées séquentiellement les unes des autres ; et le second cylindre de laminage (134) est muni sur celui-ci d'une pluralité de rainures (133) qui ont une forme et une taille similaires et sont espacées séquentiellement les unes des autres.

3. Équipement de combinaison thermique pour électrodes (100) selon la revendication 1 ou 2, dans lequel chaque rainure (133) est une rainure annulaire (133) prévue circonférentiellement à la périphérie du cylindre de laminage respectif.

4. Équipement de combinaison thermique pour électrodes (100) selon l'une quelconque des revendications 1 à 3, dans lequel le dispositif d'entraînement comprend un servomoteur, un premier composant d'entraînement et un second composant d'entraînement, le premier composant d'entraînement est relié au premier cylindre de laminage (132), le second composant d'entraînement est relié au second cylindre de laminage (134), et le servomoteur est relié à la fois au premier composant d'entraînement et au second composant d'entraînement de manière à entraîner simultanément le premier composant d'entraînement et le second composant d'entraînement de telle sorte que le premier cylindre de laminage (132) et le second cylindre de laminage (134) soient entraînés simultanément pour tourner, et le premier cylindre de laminage (132) et le second cylindre de laminage (134) sont mis en rotation à la même vitesse périphérique et dans des directions opposées et le dispositif de chauffage (120) est disposé à un niveau sensiblement identique à un niveau auquel l'espace entre le premier cylindre de laminage (132) et le second cylindre de laminage (134) est prévu.

5. Équipement de combinaison thermique pour électrodes (100) selon l'une quelconque des revendications 1 à 4, dans lequel le premier composant de chauffage (122) et/ou le second composant de chauffage (124) ont chacun un fil de chauffage et le fil de chauffage est incorporé dans la plaque de chauffage (122a) sous une forme de serpentin.

6. Équipement de combinaison thermique pour électrodes (100) selon l'une quelconque des revendications 1 à 5, dans lequel le premier composant chauffant (122) et/ou le second composant chauffant (124) ont chacun une pluralité de fils chauffants, et les fils chauffants sont incorporés dans la plaque chauffante (122a) d'une manière parallèle et côte à côte.

7. Équipement de combinaison thermique pour électrodes (100) selon l'une quelconque des revendications 1 à 6, dans lequel l'équipement de combinaison thermique pour électrodes (100) comprend en outre un siège de support (140) et un cylindre de pression (150), dans lequel le siège de support (140) est disposé sur la base (110), et le cylindre de pression (150) est disposé sur le siège de support (140) et est relié au premier cylindre de laminage (132) de telle sorte que le premier cylindre de laminage (132) applique une pression vers le bas sur la stratification d'électrode.

8. Équipement de combinaison thermique pour électrodes (100) selon la revendication 7, dans lequel l'équipement de combinaison thermique pour électrodes (100) comprend en outre un cylindre auxiliaire (160), une plaque coulissante (170) et une plaque de connexion (180), dans lequel le cylindre auxiliaire (160) est disposé sur le siège de support (140), le premier cylindre de laminage (132) est disposé sur la plaque de connexion (180), et la plaque de connexion (180) est connectée au siège de support (140) via la plaque coulissante (170), de sorte que le cylindre auxiliaire (160) entraîne le premier cylindre de laminage (132) qui est disposé sur la plaque de connexion (180) pour coulisser vers le haut et vers le bas le long de la plaque coulissante (170) afin d'ajuster la distance entre le premier cylindre de laminage (132) et le second cylindre de laminage (134).

9. Équipement de combinaison thermique pour électrodes (100) selon l'une quelconque des revendications 1 à 8, dans lequel l'équipement de combinaison thermique pour électrodes (100) comprend en outre un cylindre de transition (190), et le cylindre de transition (190) est disposé sur la base (110) et est sur un côté du dispositif de laminage d'électrode (130) éloigné du dispositif de chauffage (120), le cylindre de transition (190) est configuré pour transporter la stratification d'électrode laminée.

10. Équipement de combinaison thermique pour électrodes (100) selon l'une quelconque des revendications 1 à 9, comprenant en outre un cylindre de transition (190) ; le cylindre de transition (190) est configuré pour transporter la stratification d'électrode laminée.

11. Procédé de thermocompression d'une stratification d'électrode à l'aide de l'équipement de combinaison thermique pour électrodes (100) selon l'une quelconque des revendications 1 à 10, comprenant les étapes consistant à : chauffer une stratification d'électrode à l'aide du dispositif de chauffage (120), et transporter la stratification d'électrode chauffée vers l'espace entre le premier cylindre de laminage (132) et le second cylindre de laminage (134) de telle sorte que la stratification d'électrode chauffée soit thermo-laminée par le premier cylindre de laminage (132) et le second cylindre de laminage (134).

12. Procédé de thermocompression d'une stratification d'électrode selon la revendication 11, dans lequel le premier cylindre de laminage (132) a une forme et une taille similaires à celles du second cylindre de laminage (134), et le premier cylindre de laminage (132) est pourvu d'une pluralité de rainures (133) qui ont une forme et une taille similaires et sont espacées de manière séquentielle les unes des autres ; et le second cylindre de laminage (134) est pourvu d'une pluralité de rainures (133) qui ont une forme et une taille similaires et sont espacées de manière séquentielle les unes des autres, dans lequel chaque rainure (133) est une rainure annulaire (133) prévue de manière circonférentielle à la périphérie du cylindre de laminage respectif.

13. Procédé de thermocompression d'une stratification d'électrode selon la revendication 11 ou 12, dans lequel le dispositif d'entraînement comprend un servomoteur, un premier composant d'entraînement et un second composant d'entraînement, le premier composant d'entraînement est relié au premier cylindre de laminage (132), le second composant d'entraînement est relié au second cylindre de laminage (134), et le servomoteur est relié à la fois au premier composant d'entraînement et au second composant d'entraînement de manière à entraîner simultanément le premier composant d'entraînement et le second composant d'entraînement, de telle sorte que le premier cylindre de laminage (132) et le second cylindre de laminage (134) soient entraînés simultanément pour tourner, et le premier cylindre de laminage (132) et le second cylindre de laminage (134) sont mis en rotation à la même vitesse périphérique et dans des directions opposées.
